# EUROPÄISCHE PATENTANMELDUNG

(11) **EP 1 790 426 A2**
(43) Veröffentlichungstag der Anmeldung: **30.05.2007**
(21) Anmeldenummer: 05028028.8
(22) Anmeldetag: 21.12.2005
(51) Int. Cl.: B23K 26/14

(54) **Verfahren und Vorrichtung zum Laserstrahlbearbeiten**

(30) Priorität: 27.10.2005 DE 102005051607
(71) Anmelder: Linde Aktiengesellschaft, 65189 Wiesbaden (DE)
(72) Erfinder: Danzer, Wolfgang, 84405 Dorfen (DE)

(57) **Zusammenfassung**

Die Erfindung betrifft ein Verfahren zum Laserstrahlbearbeiten, bei dem ein Laserstrahl (1) auf ein Werkstück (3) gelenkt wird, wobei im Wirkungsbereich des Laserstrahls (1) ein Plasma gebildet und wobei im Wirkungsbereich des Laserstrahls zur Beeinflussung des Plasmas ein elektrisches Feld angelegt wird. Erfindungsgemäß wird das elektrische Feld mit einer Spannung von weniger als 500 V aufgebaut.

## Beschreibung

Die Erfindung betrifft ein Verfahren zum Laserstrahlbearbeiten, bei dem ein Laserstrahl auf ein Werkstück gelenkt wird, wobei im Wirkungsbereich des Laserstrahls ein Plasma gebildet und wobei im Wirkungsbereich des Laserstrahls zur Beeinflussung des Plasmas ein elektrisches Feld angelegt wird. Ferner betrifft die Erfindung eine Vorrichtung zum Laserstrahlbearbeiten umfassend ein zur Bearbeitung bereitgestelltes Werkstück, eine Anordnung zur Erzeugung und Lenkung eines Laserstrahls auf das Werkstück, eine an zwei Pole anschließbare Spannungsquelle, wobei der eine Pol mit dem Werkstück verbunden ist, und eine als Pol einsetzbare Einrichtung.

Beim Laserstrahlbearbeiten, insbesondere beim Laserschweißen wird im Werkstück mit einem Laserstrahl Material geschmolzen und nach dem Erstarren des geschmolzenen Materials bildet sich eine stoffschlüssige Verbindung aus. Der Laserstrahl dringt aufgrund seiner hohen Energiedichte weit in das Werkstück ein. Dadurch entstehen beim Laserschweißen sehr schlanke Schweißnähte und es sind sehr hohe Schweißgeschwindigkeiten möglich. Beim Eindringen in das Werkstück bildet sich eine Dampfkapillare aus verdampfendem Werkstückmaterial aus. Diese Dampfkapillare wird als Keyhole bezeichnet. Je tiefer die Dampfkapillare ist, desto höher sind Geschwindigkeit und Temperatur des austretenden Materials. Das Werkstückmaterial wird bei entsprechend hoher Energiedichte des Laserstrahls nicht nur verdampft, sondern das verdampfte Material ionisiert auch. Wird ein Prozessgas verwendet, ionisiert dieses unter der Einwirkung des Laserstrahls. Es bildet sich aus dem Prozessgas ein sog. Plasma aus. Das Plasma dringt über das Keyhole weit in das Werkstück ein und gibt einen großen Teil seiner Energie an das umliegende Werkstückmaterial ab, so dass dieses unter indirektem Lasereinfluss stehende Material schmilzt. Aus dieser Schmelze bildet sich schließlich die stoffschlüssige Verbindung.

Das Plasma bildet sich im Wirkungsbereich des Lasers. In erster Linie entsteht es im Keyhole, wo der Materialdampf ionisiert. Das Plasma steigt zur Werkstückoberfläche auf. Dort tritt es aus dem Keyhole aus und bildet auf der Werkstückoberfläche über dem Keyhole eine Wolke. Das Plasma im Keyhole und die Plasmawolke stören den Laserschweißvorgang sehr, da das Plasma die Laserstrahlung absorbiert und der Laserstrahl dann nicht mehr weit genug in das Werkstück eindringen kann. Dies hat zur Folge, dass - je nach Ausmaß der Absorption und in Abhängigkeit des Werkstückmaterials, der erforderlichen Qualität und der Schweißaufgabe - sich das Schweißergebnis verschlechtert, die Schweißgeschwindigkeit zurückgenommen werden muss oder gar der Schweißprozess an sich zum Erliegen kommt. Mit Hilfe von Prozessgasen wird erfolgreich versucht, die Plasmabildung der Umgebung zu verhindern und das aus dem Werkstückmaterial entstehende Plasma zu verdünnen und damit für den Laserstrahl transparent zu gestalten. Als Prozessgas werden deshalb Gase verwendet, die möglichst wenig zur Plasmabildung neigen. Im Stand der Technik werden meist reines Helium, oder Helium-Argon-Gemische mit hohen Heliumanteilen verwendet. Jedoch kann auch ein Hinzufügen von anderen Gasen die Plasmakontrolle unterstützen. So beinhaltet beispielsweise die EP 946 331 die Zugabe von Stickstoff oder die EP 1 022 086 und die EP 1 022 087 die Zugabe von Sauerstoff oder/und Kohlendioxid.

Aus der DE 103 10 293 A1 ist eine Vorrichtung und ein Verfahren zum Laserstrahlbohren und -abtragen bekannt. Über einem zu bearbeitenden Werkstück ist eine Elektrode angeordnet und eine Strom-Spannungsquelle ist so geschaltet, dass ein elektrisches Feld zwischen dem Werkstück und der Elektrode anliegt. Ein Laserstrahl trägt Material an einer Wirkstelle vom Werkstück ab. Das in der Nähe der Wirkstelle aus Materialdampf entstehende Plasma wird in Richtung der Elektrode beschleunigt, so dass es von der Wirkstelle entfernt wird. Dazu ist ein elektrisches Feld von 1000 V notwendig.

Aus der DD 292 160 A5 ist ein Verfahren zum plasmamodifizierten Laserstrahlschweißen bekannt, bei welchem auf die Plasmawolke Einfluss genommen wird. Elektromagnetische und/oder elektrische Felder sorgen dafür, dass die erzeugte Plasmawolke gezielt auf eine Werkstückoberfläche gedrückt wird und sich der Ionisierungsgrad der Plasmawolke verbessert. Dabei wird die Spannung so gewählt, dass sich zwischen Kathode oder Schweißkopf und Werkstück ein Plasma bildet, wobei das bereits durch den Laser entstehende Plasma als "Zünder" wirkt.

Zusammenfassend ist festzustellen, dass die Beeinflussung des Plasmas durch die Verwendung eines Prozessgases oder auch durch Anlegen von elektromagnetischen bzw. elektrischen Feldern zwar möglich ist, jedoch in sehr vielen Fällen zu Ergebnissen führt, die nicht zufriedenstellen. Die Beeinflussung des Plasmas ist in vielen Fällen unzureichend, der Bearbeitungsprozess bleibt instabil. Die Folge sind ungleichmäßige Schweißnähte oder Schnittkanten. Diese sind nicht nur optisch zu bemängeln sondern auch minderer Qualität. Besonders bei hohen Bearbeitungsgeschwindigkeiten zeigt sich diese Problematik.

Der Erfindung liegt die Aufgabe zugrunde, ein Verfahren und eine Vorrichtung anzugeben, welche eine zuverlässige Plasmalenkung und Plasmaführung bei der Laserbearbeitung ermöglichen, insbesondere auch bei hohen Bearbeitungsgeschwindigkeiten.

Die Aufgabe wird durch ein erfindungsgemäßes Verfahren dadurch gelöst, dass das elektrische Feld mit einer Spannung von weniger als 500 V aufgebaut wird. Das erfindungsgemäße Verfahren ermöglicht eine wirksame Plasmalenkung und Plasmaführung. Aufgrund dieser erfindungsgemäßen Beeinflussung des Plasmas im Wirkungsbereich des Lasers wird der Bearbeitungsprozess sehr stabil und gut beherrschbar. Dies führt zu sehr gleichmäßigen Bearbeitungsergebnissen ohne nennenswerte Ausreißer. Die durch das erfindungsgemäße Verfahren einsetzende erfindungsgemäße Plasmalenkung und Plasmaführung ist wohl darauf zurückzuführen, dass das Plasma an der Bearbeitungsstelle stabilisiert wird. Diese Plasmastabilisierung unterstützt wohl den Laserstrahl an sich und fördert damit die Gleichmäßigkeit des Laserstrahlungfeldes, wodurch sich der Energieeintrag in die Bearbeitungsstelle stabilisiert. Dies wiederum fördert auch den Energieeintrag in das Keyhole hinein, wodurch sich der Bearbeitungsprozess auch weit in die Bearbeitungsstelle hinein stabilisiert. Mit dem erfindungsgemäßen Verfahren ist gewährleistet, dass die Qualität der Bearbeitung über den gesamten Bearbeitungsbereich hinweg konstant hoch gehalten werden kann. Dies zeigt sich bereits bei einer optischen Beurteilung der Bearbeitungsstellen. So zeigen mit dem erfindungsgemäßen Verfahren hergestellte Schweißnähte ein sehr gleichmäßiges Aussehen mit konstant verlaufender Schweißraupe und auch erfindungsgemäß hergestellte Schnittkanten sind frei von Unregelmäßigkeiten. Zurückzuführen ist dies wohl auf eine positive, sich selbst verstärkende Wechselwirkung zwischen Laserstrahl und elektrischen Feld. Dieser Synergieeffekt zwischen Laser und elektrischem Feld zeigt sich nur bei verhältnismäßig niedrigen Spannungen von weniger als 500 V. Bei höheren Spannungen verliert sich der Synergieeffekt zunehmend, da das elektrische Feld mit zunehmender Feldstärke immer intensiver auf das Plasma Einfluss nimmt und selbst zu Plasmabewegungen führt, welche wiederum zu Instabilitäten im Bearbeitungsprozess führen. Mit zunehmender Unruhe des Bearbeitungsprozess jedoch gehen Qualitätsverluste mit ein. Es hat sich nun gezeigt, dass bei Spannungen von mehr als 500 V die Instabilitäten im Bearbeitungsprozess derartig zunehmen, dass sich die Vorteile der Erfindung verlieren. Die vorgenannten erfindungsgemäßen Vorteile zeigen sich auch bei hohen Bearbeitungsgeschwindigkeiten, welche aufgrund des schnellen Fortschreitens prinzipiell sehr empfindlich bezüglich auftretenden Instabilitäten sind.

Vorteilhafterweise beträgt die Spannung weniger als 300, bevorzugt weniger als 100 V. Es hat sich gezeigt, dass die Stabilisierung des Bearbeitungsprozesses bei niedrigeren Spannungswerten ausgeprägter ist als bei höheren Spannungen. Es ist davon auszugehen, dass mit zunehmender Spannungshöhe das elektrische Feld selbst zur Unruhe im Bearbeitungsprozess beiträgt. So zeigen sich die Vorteile der Erfindung insbesondere bei Spannungen im Bereich von 5 bis 50 V.

In vorteilhafter Ausgestaltung der Erfindung wird einer der beiden Pole des elektrischen Feldes von dem Werkstück gebildet. Das erfindungsgemäße Verfahren lässt sich mit einer derartigen Ausführung besonders einfach durchführen. Ob die Polung des Werkstücks dabei als positiver oder negativer Pol erfolgt, hängt von der vorliegenden Bearbeitungsaufgabe ab. Wird einer der beiden Pole von dem Werkstück gebildet, stellt sich, da der zweite Pol über dem Werkstück angebracht wird, ein elektrisches Feld mit Feldlinien ein, welche in etwa vertikal zum Werkstück verlaufen. In manchen Fällen kann jedoch auch ein elektrisches Feld von Vorteil sein, dessen Feldlinien in etwa horizontal zum Werkstück verlaufen sollen. Für derartige Felder wird jedoch nicht das Werkstück einen Pol bilden, sondern beide Pole werden über dem Werkstück angeordnet sein.

Mit Vorteil wird ein statisches elektrisches Feld verwendet. Jedoch stellen sich die Vorteile der Erfindung auch für ein altemierendes elektrisches Feld, welches durch Anlegen einer Wechselspannung erhalten wird, ein.

In vorteilhafter Weiterbildung der Erfindung wird einer der beiden Pole des elektrischen Feldes von einer ringförmigen, den Laserstrahl umschließenden Anordnung gebildet. Mit einer ringförmig, den Laserstrahl umschließenden Anordnung wird ein elektrisches Gradientenfeld um den Laserstrahl erzeugt. Die Vorteile der Erfindung stellen sich für ein derartiges Feld in besonders herausragender Weise ein.

Mit Vorteil wird eine Prozessgasdüse verwendet, an welcher der oder die Pole angebracht werden. Bei einer Anbringung des Pols oder der Pole an einer Prozessgasdüse ist keine weitere Einrichtungen zur Durchführung des erfindungsgemäßen Verfahrens notwendig. Dabei kann die Prozessgasdüse selbst als Pol verwendet werden oder es wird an die Prozessgasdüse eine gegen die Prozessgasdüse isolierte Elektrode angebracht. Diese Elektrode kann von beliebiger Gestalt sein, wobei sich auch hier eine ringförmige Elektrode empfiehlt. In manchen Fällen kann es auch von Vorteil sein, ein elektrisches Feld horizontal zum Werkstück zu erzeugen. Dies ist auf einfache Weise möglich, indem zwei gegeneinander isolierte Pole an die Prozessgasdüse angebracht werden.

Vorteilhaferweise wird ein Prozessgas verwendet. Durch die Verwendung eines Prozessgases lässt sich insbesondere die Bildung und Entstehung des Plasmas beeinflussen. Zusammen mit dem erfindungsgemäßen Verfahren lässt es sich somit umfassend auf das Plasma einwirken, wodurch der Bearbeitungsprozess verbessert wird.

Als Prozessgas werden mit besonderen Vorteilen Argon, Helium oder Argon-Helium-Gemische verwendet. Helium sorgt dabei als sehr leichtes Gas, welches tief in das Keyhole eindringt, dafür, dass der über das Plasma erfolgende Energietransport auch bis weit in das Werkstück bis an den Keyholegrund hin stattfindet. Argon dient in erster Linie zur Abschirmung gegenüber der Umgebung und vermeidet damit unkontrollierte Plasmabildung aus Luft und Luftfeuchtigkeit.

In vorteilhaften Ausgestaltungen wird als Prozessgas eine Gasmischung, die aus Argon oder aus Argon und Helium und weiterhin aus Kohlendioxid, Sauerstoff oder/und Stickstoff besteht, verwendet. Durch die Zugabe dieser Gase verbessert sich Kontrolle der Plasmabildung aus Prozessgas. Dies wirkt sich zusätzlich vorteilhaft auf die erfindungsgemäße Plasmabeeinflussung aus. Unter Umständen kann sich auch eine Zugabe von Wasserstoff zum Prozessgas vorteilhaft auswirken.

Mit besonderen Vorteilen wird das Verfahren zum Laserstrahlschweißen oder Laserstrahlschneiden angewendet. Hier führt es zu hochwertigen Schweißnähten beziehungsweise glatten Schneidkanten. Das erfindungsgemäße Verfahren lässt sich aber auch zu allen anderen Laserbearbeitungsverfahren, wie beispielsweise Bohren, Ritzen und anderen abtragenden Arbeitsweisen einsetzen. Auch beim Löten zeigen sich die erfindungsgemäßen Vorteile.

Die Aufgabe wird hinsichtlich der Vorrichtung dadurch gelöst, dass die als Pol einsetzbare Einrichtung als eine den Laserstrahl umschließende Ringelektrode ausgebildet und mit dem zweiten Pol der Spannungsquelle verbunden ist. Eine derartige Vorrichtung zeigt alle erfindungsgemäßen Vorteile. Aufgrund der Ringelektrode stellt sich das besonders vorteilhafte Gradientenfeld um den Laserstrahl ein.

Ein vorteilhaftes Ausführungsbeispiel des erfindungsgemäßen Verfahrens wird im Folgenden anhand der beigefügten Zeichnungen näher erläutert, bei denen
- Fig. 1: schematisch eine Anordnung gemäß dem erfindungsgemäßen Verfahren,
- Fig. 2: schematisch eine erfindungsgemäße Vorrichtung,
- Fig. 3: eine Werkstückprobe mit einer mittels des erfindungsgemäßen Verfahrens und einer nach dem Stand der Technik hergestellten Schweißnaht und
- Fig. 4: die Schweißnähte der Fig. 3 im Anschliff zeigt.

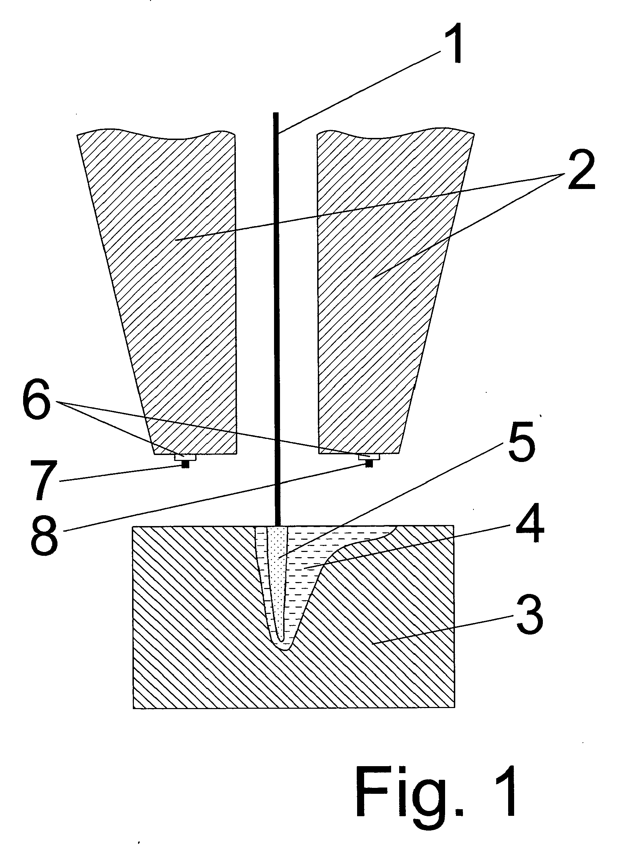

Das erfindungsgemäße Verfahren und die erfindungsgemäße Vorrichtung zur Laserbearbeitung werden am Beispiel eines Laserschweißverfahrens beschrieben. Zum Laserstrahlschweißen wird, wie Fig. 1 zeigt, ein Laserstrahl 1 auf ein Werkstück 3 gelenkt. Der Laserstrahl 1 wird von einer Prozessgasdüse 2 ummantelt, die ein Prozessgas auf das Werkstück 3 lenkt. An der Schweißstelle entsteht im Werkstück 3 ein Keyhole 5, das von einer Schmelze 4 umgeben ist. Die Schmelze 4 besteht aus geschmolzenem Werkstück-Material, welches schließlich die Schweißnaht ausbildet. Das Keyhole 5 bildet sich in der unmittelbaren Umgebung des Laserstrahls 1 aus, in der Material verdampft und ionisiert wird. Ionisierter Materialdampf und vom Laserstrahl ionisiertes Prozessgas formen im Keyhole 5 ein Plasma, das aufsteigt und über dem Werkstück um den Laserstrahl 1 eine Wolke bildet. An der Prozessgasdüse 2 liegt eine Spannung an. Dazu ist an der auf das Werkstück gerichteten Seite der Prozessgasdüse 2 ein Isolator 6 und an dem Isolator 6 eine ringförmige negative elektrische Elektrode 7 angebracht. Die Elektrode 7 ist also gegenüber der Prozessgasdüse 2 isoliert und wird an den Pol einer Spannungsquelle angeschlossen. Der zweite Pol der Spannungsquelle wird an das Werkstück angebracht. Folglich wird ein elektrisches Feld zwischen an der Düse angebrachten Elektrode 7 und dem Werkstück 3 aufgebaut.

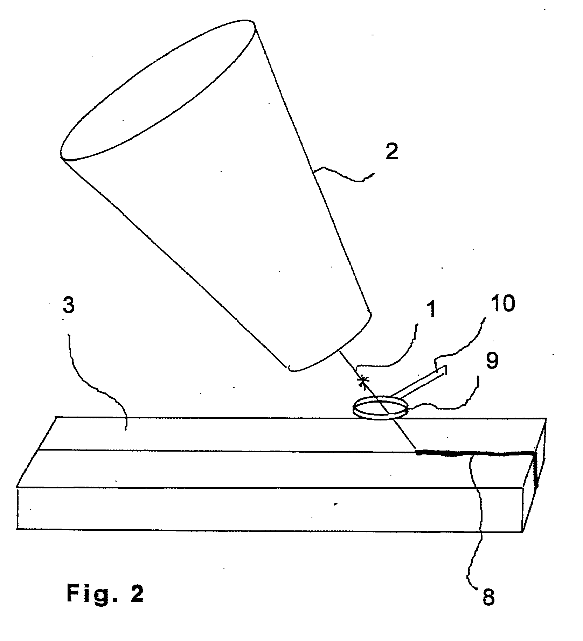

Fig. 2 zeigt schematisch eine weitere erfindungsgemäße Prozessgasdüse 2 über einem Werkstück 3. Gleiche Elemente sind mit denselben Bezugszeichen versehen. Ein Laserstrahl 1 wird durch die Prozessgasdüse 2 von Prozessgas ummantelt und erzeugt die Schweißnaht 8 in dem Werkstück 3. Eine Ringelektrode 9, an die über einen elektrischen Anschluss 10 eine Spannung angelegt werden kann, umgibt den Laserstrahl 1 und ist mit Abstand vor der Prozessgasdüse 2 angeordnet. Den Gegenpol bildet auch hier das Werkstück 3. In dem vorliegenden Beispiel hat die Ringelektrode 9 einen Durchmesser von ca. 5 mm und wird ca. 9 mm über dem Werkstück 3 geführt. Die Prozessgasdüse 2 eine Öffnung von ca. 15 mm auf. An der Ringelektrode liegt eine Spannung von - 10 V Gleichspannung gegenüber dem Werkstück 3 an. Beim Schweißen ergibt sich eine sehr gleichmäßige Schweißnaht - auch bei hoher Bearbeitungsgeschwindigkeit.

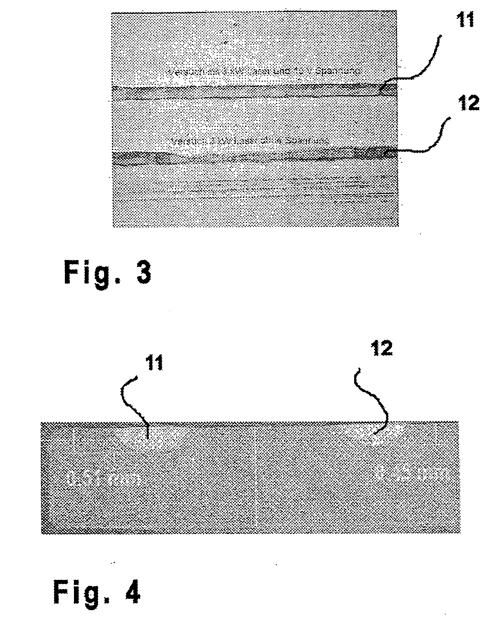

Fig. 3 zeigt eine Werkstückprobe mit einer mittels des erfindungsgemäßen Verfahrens und der erfindungsgemäßen Vorrichtung, wie sie gemäß Fig. 2 beschrieben ist, gefertigten Schweißnaht 11 sowie zum Vergleich einer nach dem Stand der Technik hergestellten Schweißnaht 12. Jedes mal betrug die Laserleistung 3 kW. Bereits die optische Bewertung der Schweißnähte ergibt, dass die mit dem erfindungsgemäßen Verfahren erstellte Schweißnaht 11 deutlich gleichmäßiger und damit von höherer Qualität ist als die Vergleichsnaht.

Fig. 4 zeigt die Schweißnähte der Fig. 3 im Anschliff. Die mit dem erfindungsgemäßen Verfahren erstellte Schweißnaht 11 weist einen deutlich tieferen Einbrand in das Material der Werkstückprobe von 0, 51 mm auf und hat weiterhin eine Querschnittfläche von 0,66 mm². Demgegenüber weist die Vergleichsnaht 12, welche nach dem Stand der Technik gefertigt wurde, eine Einbrandtiefe von nur 0,45 mm und einen Querschnitt von nur 0,47 mm² auf.

### Bezugszeichenliste

- 1: Laserstrahl
- 2: Prozessgasdüse
- 3: Werkstück
- 4: Schmelze
- 5: Keyhole
- 6: Isolator
- 7: Elektrode
- 8: Schweißnaht
- 9: Ringelektrode
- 10: elektrischer Anschluss
- 11: Schweißnaht
- 12: Schweißnaht

## Patentansprüche

1. Verfahren zum Laserstrahlbearbeiten, bei dem ein Laserstrahl (1) auf ein Werkstück (3) gelenkt wird, wobei im Wirkungsbereich des Laserstrahls (1) ein Plasma gebildet und wobei im Wirkungsbereich des Laserstrahls zur Beeinflussung des Plasmas ein elektrisches Feld angelegt wird, **dadurch gekennzeichnet, dass** das elektrische Feld mit einer Spannung von weniger als 500 V aufgebaut wird.

2. Verfahren nach Anspruch 1, **dadurch gekennzeichnet, dass** die Spannung weniger als 300, bevorzugt weniger als 100 V beträgt.

3. Verfahren nach Anspruch 1 oder 2, **dadurch gekennzeichnet, dass** einer der beiden Pole des elektrischen Feldes von dem Werkstück gebildet wird.

4. Verfahren nach einem der Ansprüche 1 bis 3, **dadurch gekennzeichnet, dass** ein statisches elektrisches Feld verwendet wird.

5. Verfahren nach einem der Ansprüche 1 bis 4, **dadurch gekennzeichnet, dass** einer der beiden Pole des elektrischen Feldes von einer ringförmigen, den Laserstrahl umschließenden Anordnung gebildet wird.

6. Verfahren nach einem der Ansprüche 1 bis 5, **dadurch gekennzeichnet, dass** eine Prozessgasdüse verwendet wird, an welcher der oder die Pole angebracht werden.

7. Verfahren nach einem der Ansprüche 1 bis 6, **dadurch gekennzeichnet, dass** ein Prozessgas verwendet wird.

8. Verfahren nach Anspruch 7, **dadurch gekennzeichnet, dass** als Prozessgas Argon, Helium oder Argon-Helium-Mischungen verwendet werden.

9. Verfahren nach Anspruch 7, **dadurch gekennzeichnet, dass** als Prozessgas eine Gasmischung, die aus Argon oder aus Argon und Helium und weiterhin aus Kohlendioxid, Sauerstoff oder/und Stickstoff besteht, verwendet wird.

10. Verfahren nach einem der Ansprüche 1 bis 9, **dadurch gekennzeichnet, dass** das Verfahren zum Laserstrahlschweißen oder Laserstrahlschneiden angewendet wird.

11. Vorrichtung zum Laserstrahlbearbeiten umfassend ein zur Bearbeitung bereitgestelltes Werkstück (3), eine Anordnung zur Erzeugung und Lenkung eines Laserstrahls (1) auf das Werkstück (3), eine an zwei Pole anschließbare Spannungsquelle, wobei der eine Pol mit dem Werkstück verbunden ist, und eine als Pol einsetzbare Einrichtung **dadurch gekennzeichnet, dass** die als Pol einsetzbare Einrichtung als eine den Laserstrahl umschließende Ringelektrode (9) ausgebildet und mit dem zweiten Pol der Spannungsquelle verbunden ist.
